# EUROPÄISCHE PATENTANMELDUNG

(11) **EP 1 157 769 A2**
(43) Veröffentlichungstag der Anmeldung: **28.11.2001**
(21) Anmeldenummer: 01105638.9
(22) Anmeldetag: 07.03.2001
(51) Int. Cl.: B23D 71/02, A63H 33/04

(54) **Reibe für aus einem festen Schaum bestehende Spielbausteine**

(30) Priorität: 23.05.2000 DE 20009182 U
(71) Anmelder: Artur Fischer TIP GmbH & Co. KG, 72176 Waldachtal (DE)
(72) Erfinder: Senator E.h. Prof. Dr. phil.h.c.Dr.-Ing. E.h., 72178 Waldachtal (DE)

(57) **Zusammenfassung**

Die Erfindung betrifft eine Reibe für einen Spielbaustein, der aus Stärke oder einem stärkehaltigen Material durch Spritzgießen, Extrudieren oder Strangpressen geformt und aufgeschäumt ist. Zum Zerkleinern eines derartigen Spielbausteins zu einem schüttfähigen Reibgut wird vorgeschlagen, dass die Reibe (10) eine Reibeelement (14) und einen Halter (12) aufweist, in dem das Reibelement (14) wechselbar aufgenommen ist.

## Beschreibung

Die Erfindung betrifft eine Reibe für aus einem festen Schaum bestehende Spielbausteine.

Ein derartiger Spielbaustein ist offenbart in der DE 197 03 038. Der bekannte Spielbaustein ist aus Stärke oder einem stärkehaltigen Material durch Spritzgießen, Extrudieren oder Strangpressen geformt und aufgeschäumt. Er weist beispielsweise eine näherungsweise zylindrische Form auf und ist durch Befeuchten selbstklebend und dadurch mit weiteren Spielbausteinen verbindbar.

Der Erfindung liegt die Aufgabe zugrunde eine Reibe zum Zerkleinern eines derartigen Spielbaustein zu einem schüttfähigen Reibgut, beispielsweise zu aus dem festen Schaum bestehenden Flocken, vorzuschlagen.

Diese Aufgabe wird erfindungsgemäß durch die Merkmale des Anspruchs 1 gelöst. Die erfindungsgemäße Reibe weist ein Reibelement und einen Halter auf, in dem das Reibelement wechselbar aufgenommen ist. Unter Reibe im Sinne der Erfindung soll ein Werkzeug verstanden werden, mit dem sich durch Andrücken und Verschieben eines aus einem festen Schaum bestehenden Spielbausteins der Spielbaustein zu einem flockigen oder gries- oder mehlförmigen Reibgut zerkleinern lässt, also beispielsweise auch eine Feile, Raspel oder dergleichen. Das Reibelement der erfindungsgemäßen Reibe kann beispielsweise eine Plattenform aufweisen. Der Halter der erfindungsgemäßen Reibe hat den Vorteil, dass er ein einfaches Halten des Reibelements ermöglicht. Die erfindungsgemäße Reibe ist leicht handhabbar und ihr Reibelement lässt sich wechseln beispielsweise gegen ein gröberes oder feineres Reibelement zur Herstellung gröberen oder feineren Reibgutes.

Bei einer Ausgestaltung der Erfindung weist das Reibelement in verschiedenen Reibrichtungen unterschiedliche Reib-Feinheitsgrade auf. Dies bedeutet, dass das Reibgut unterschiedlich grob ist, wenn der Spielbaustein in verschiedenen Reibrichtungen, insbesondere in entgegengesetzten Reibrichtungen auf dem Reibelement verschoben wird. Dies hat den Vorteil, dass in einfacher Weise und mit einem einzigen Reibelement unterschiedlich grobes Reibgut herstellbar ist. Die unterschiedlichen Reib-Feinheitsgrade sind beispielsweise durch in einer Richtung schräg stehende Zähne, Stifte oder dgl. des Reibelements möglich. Da das Reibelement wechselbar ist, lässt sich durch Umdrehen des Reibelements und Streichen des Spielbausteins in derselben Richtung bezogen auf den Halter unterschiedlich grobes Reibgut herstellen.

Bei einer Ausgestaltung der Erfindung weist der Halter zwei einander gegenüberliegend angeordnete Nuten auf, in die das Reibelement einschiebbar ist. Die beiden Nuten weisen ein offenes Ende zum Einschieben des Reibelements und ein geschlossenes Ende als Anschlag für das Reibelement auf. Diese Ausgestaltung der Erfindung ermöglicht ein einfaches Wechseln des Reibelements ohne Werkzeug bei gutem Halt des Reibelements im Halter.

Bei einer Weiterbildung der Erfindung verengt sich mindestens eine der beiden Nuten an Ihrem geschlossenen Ende. Dies ermöglicht ein leichtgängiges Einschieben des Reibelements in die beiden Nuten des Halters über einen großen Teil eines Einschiebewegs und ein Klemmen des Reibelements erst am Ende des Einschiebewegs.

In bevorzugter Ausgestaltung der Erfindung ist der Halter als Behälter für mit der Reibe hergestelltes Reibgut ausgebildet, es ist also kein extra Auffanggefäß für das Reibgut notwendig.

Bei einer Weiterbildung der Erfindung weist der Halter eine insbesondere trichterartig wirkende Schüttöffnung für das Reibgut auf, mit der sich das Reibgut beispielsweise zum Modellieren von Modelllandschaften zielgenau schütten lässt.

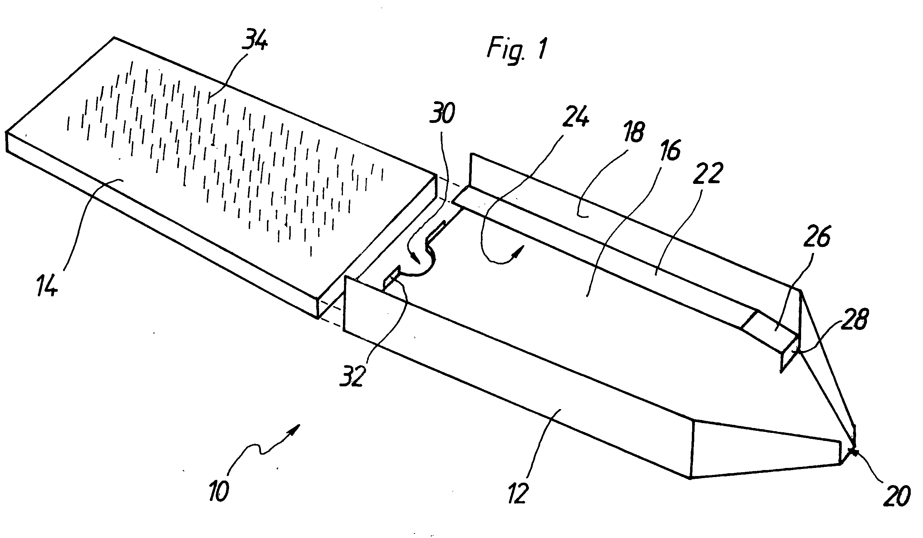

Die Erfindung wird nachfolgend anhand eines in der Zeichnung dargestellten Ausführungsbeispiel näher erläutert. Die einzige Figur zeigt eine erfindungsgemäße Reibe in einer perspektivischen Explosionsdarstellung.

Die erfindungsgemäße Reibe 10 weist einen Halter 12 aus Kunststoff und ein Reibelement 14 auf. Der Halter 12 weist eine Grundplatte 16 auf, die in Draufsicht die Form eines Rechtecks mit einem an einer Stirnseite angesetzten Dreieck aufweist. An Längsseiten weist die Grundplatte 16 Seitenwände 18 auf, die an der dreiecksförmig zulaufenden Seite der Grundplatte 16 trichterförmig schräg aufeinander zu verlaufen und mit Abstand voneinander enden. Auf diese Weise ist eine Schüttöffnung 20 gebildet. Am gegenüberliegenden Stirnende weist der Halter 12 keine Wand auf. Der Halter 12 bildet mit seiner Grundplatte 16 und den Seitenwänden 18 einen Behälter für mit der Reibe 10 hergestelltes Reibgut mit einer Schüttöffnung 20 an einem Stirnende.

Von Innenseiten der Seitenwände 18 stehen Stege 22 parallel zur Grundplatte 16 ab, so dass zwischen der Grundplatte 16 und den Stegen 22 zwei in Längsrichtung des Halters 12 verlaufende Nuten 24 gebildet sind. An der Schüttöffnung 20 zugewandten Enden senken sich die Stege 22 mit einer Schräge 26 zur Grundplatte 16 ab, so dass sich die Nuten 24 verengen. An ihren der Schüttöffnung 20 zugewandten Enden gehen die Stege 22 mit einer Endwand, die einen Anschlag 28 bildet, in die Grundplatte 16 über, so dass die Nuten 24 an ihrem der Schüttöffnung 20 zugewandten Enden geschlossen sind. Der Schüttöffnung 20 abgewandte Enden der Nuten 24 sind offen.

In einer Mitte der der Schüttöffnung 20 abgewandten Seite ist die Grundplatte 16 mit einer gerundeten Ausnehmung versehen, die eine Greiföffnung 30 bildet. Seitlich der Greiföffnung 30 stehen niedrige Rastwulste 32 von der Grundplatte 16 nach oben ab.

Das Reibelement 14 ist im dargestellten und beschriebenen Ausführungsbeispiel der Erfindung ein Abschnitt einer sog. Kratze, also eines Flachriemens aus dessen einer Seite Stifte 34 vorstehen. Selbstverständlich kann das Reibelement 14 auch anders ausgebildet sein, beispielsweise als Blech mit gestanzten und geformten Zähnen, also als eine Art Raspel (nicht dargestellt). Längsränder des Reibelements 14 sind auf einer Breite, die mindestens so groß wie eine Breite der die Nuten 24 des Halters 12 bildenden Stege 22 frei von Stiften 34, um das Reibelement 14 in die Nuten 24 schieben zu können. Ebenfalls sind Querränder des Reibelements 14 frei von Stiften 34, um das Reibelement 14 greifen zu können. Die Stifte 34 stehen schräg in einer Richtung vom Reibelement 14 ab, im dargestellten Ausführungsbeispiel stehen die Stifte 34 schräg in Richtung der Schüttöffnung 20.

Das Reibelement 14 wird von der offenen Seite in die Nuten 24 des Halters 12 geschoben. Am Ende eines Einschiebewegs klemmen die Schrägen 26 der Stege 22 das Reibelement 14 zwischen sich und der Grundplatte 16 fest. Zusätzlich halten die Rastwulste 32 das Reibelement 14 im Halter 12. Es lässt sich nun ein nicht dargestellter, aus einem festen Schaum bestehender Spielbaustein über die Reibe 10 schieben, wobei die Stifte 34 flockiges, schüttfähiges Reibgut vom Spielbaustein trennen. Das Reibgut wird in dem einen Behälter bildenden Halter 12 aufgefangen und lässt sich durch die Schüttöffnung 20 beispielsweise zum Modellieren von Modelllandschaften zielgenau ausschütten.

Die Schrägstellung der Stifte 34 lässt sich zur Herstellung gröberen oder wahlweisen feineren Reibguts nutzen: Wird der nicht dargestellte, aus dem festen Schaum bestehende Spielbaustein in Richtung der Schrägstellung der Stifte 34 über das Reibelement 14 geschoben, trennen die Stifte 34 feinere Flocken vom Spielbaustein ab, als wenn der Spielbaustein in entgegengesetzter Richtung gegen die Schrägstellung der Stifte 34 über dies geschoben wird. Zur Herstellung feinerer Flocken bzw. feineren Reibguts wird das Reibelement 14 mit in Richtung der Schüttöffnung 20 schrägstehenden Stiften 34 in die Nuten 24 des Halters 12 geschoben und der Spielbaustein wird stets in Richtung der Schüttöffnung 20 über das Reibelement 14 geschoben. Sollen gröbere Flocken hergestellt werden, wird das Reibelement 14 umgekehrt so in die Nuten 24 des Halters 12 geschoben, dass die Stift 34 schräg von der Schüttöffnung 20 wegstehen. Auch in diesem Fall wird der nicht dargestellte Spielbaustein in Richtung der Schüttöffnung über das Reibelement 14 geschoben.

Zum Entnehmen des Reibelements 14 aus dem Halter 12 lässt sich das Reibelement 14 an seinem von Stiften 34 freien Querrand an der Greiföffnung 30 des Halters 12 gut ergreifen und aus den Nuten 24 des Halters 12 herausziehen.

## Patentansprüche

1. Reibe für aus einem festen Schaum bestehende Spielbausteine, **dadurch gekennzeichnet, dass** die Reibe (10) ein Reibelement (14) und einen Halter (12) aufweist, in dem das Reibelement (14) wechselbar aufgenommen ist.

2. Reibe nach Anspruch 1, **dadurch gekennzeichnet, dass** das Reibelement (14) in verschiedenen Reibrichtungen unterschiedliche Reib-Feinheitsgrade aufweist.

3. Reibe nach Anspruch 1, **dadurch gekennzeichnet, dass** der Halter (12) zwei Nuten (24) aufweist, die einander gegenüberliegend angeordnet sind und in denen das Reibelement (14) einliegt.

4. Reibe nach Anspruch 3, **dadurch gekennzeichnet, dass** sich mindestens eine der beiden Nuten (24) an einem Ende verengt.

5. Reibe nach Anspruch 1, **dadurch gekennzeichnet, dass** der Halter (12) als Behälter für mit der Reibe (10) hergestelltes Reibgut ausgebildet ist.

6. Reibe nach Anspruch 5, **dadurch gekennzeichnet, dass** der Halter (12) eine Schüttöffnung (20) für das Reibgut aufweist.
